# EUROPEAN PATENT APPLICATION

(11) **EP 4 368 995 A1**
(43) Date of publication of application: **15.05.2024**
(21) Application number: 22837361.9
(22) Date of filing: 01.06.2022
(51) Int. Cl.: G01N 35/00

(54) **AUTOMATIC ANALYSIS DEVICE CONTROL METHOD AND AUTOMATIC ANALYSIS DEVICE**

(30) Priority: 08.07.2021 JP 2021113307
(71) Applicant: HITACHI HIGH-TECH CORPORATION, Tokyo 105-6409 (JP)
(72) Inventor: HAYAKAWA, Shohei, Tokyo 105-6409 (JP); MATSUOKA, Shinya, Tokyo 105-6409 (JP); SUZUKI, Iwao, Tokyo 105-6409 (JP)
(74) Representative: Strehl Schübel-Hopf & Partner
(86) International application number: PCT/JP2022/022249
(87) International publication number: WO 2023/281940

(57) **Abstract**

To provide a control method for an automatic analyzer by which an amount of waste liquid of a solvent such as an organic solvent whose waste amount is strictly controlled, can be controlled, and a throughput of waste liquid treatment can be improved.

A control method for an automatic analyzer according to the present disclosure includes: acquiring information about an amount of an organic solvent contained in a liquid introduced into a reaction container and determining whether or not to suck a residual liquid in the reaction container according to the information.

## Description

### TECHNICAL FIELD

The present disclosure relates to an automatic analyzer.

### BACKGROUND ART

An automatic analyzer for analyzing a component of a sample is configured to dispense a sample liquid into a reaction container together with other necessary liquids such as a reagent liquid and a solvent. There may be the case of using a solvent, for example, an organic solvent, having its waste amount required to be strictly controlled owing to legal or other reasons. Typically, in this case, the reaction container and the solvent have to be disposed of separately.

Patent Literature 1 as described below discloses the automatic analyzer which uses the organic solvent. In the document, ethyl acetate (organic solvent) is dispensed into a centrifuge tube 14 (see 0084), and the used centrifuge tube 14 is fed to the disposal pot 73 for disposal (see 0087).

### Citation List

### Patent Literature

Japanese Unexamined Patent Application Publication No. 2001-108688

### Summary of Invention

### Technical Problem

In the related art as disclosed in Patent Literature 1, normally, the reaction container is disposed of after collecting residual liquids aspirated from all reaction containers. In other words, the generally employed automatic analyzer is configured to collect the residual liquids from all the reaction containers regardless of whether or not the reaction container has received the organic solvent. Accordingly, increase in the waste liquid amount may deteriorate the throughput of the waste liquid treatment.

In light of the above-described problem, it is an object of the present disclosure to provide a control method for an automatic analyzer for suppressing the waste liquid amount of the solvent under the strict waste amount control, and allowing improvement in the throughput of the waste liquid treatment.

### Solution to Problem

The control method for the automatic analyzer according to the present disclosure acquires the information about the amount of the organic solvent contained in the liquid to be introduced into the reaction container, and determines whether or not to aspirate the residual liquid in the reaction container based on the information.

### Advantageous Effects of Invention

The control method for the automatic analyzer according to the present disclosure suppresses the waste liquid amount of the organic solvent, and allows improvement in the throughput of the waste liquid treatment. Other characteristics, advantageous points, structures, and the like of the present disclosure will be clarified with reference to the detailed explanations as below.

### Brief Description of Drawings

[FIG. 1] FIG. 1 is a diagram showing a configuration of an automatic analyzer 1 according to a first embodiment.
[FIG. 2A] FIG. 2A is a flowchart illustrating an operation of analyzing a sample by the automatic analyzer 1.
[FIG. 2B] FIG. 2B is a flowchart illustrating the operation of analyzing the sample by the automatic analyzer 1.
[FIG. 2C] FIG. 2C is a flowchart illustrating the operation of analyzing the sample by the automatic analyzer 1.
[FIG. 3] FIG. 3 is a processing flowchart schematically illustrating the flowcharts of FIG. 2.

### DESCRIPTION OF EMBODIMENTS

### <First Embodiment>

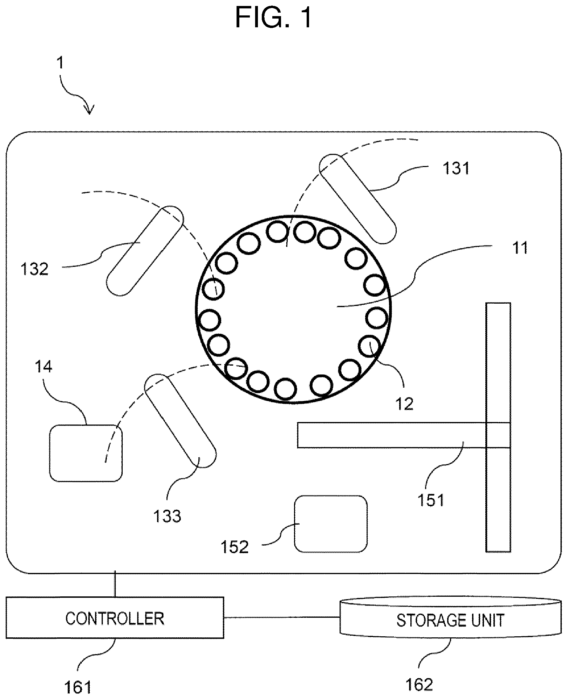

FIG. 1 is a diagram showing a configuration of an automatic analyzer 1 according to a first embodiment of the present disclosure. The automatic analyzer 1 is configured to analyze a component of a sample. The automatic analyzer 1 includes a reaction disk 11 on which a reaction container 12 is placed, a sample liquid dispensing probe 131, a reagent liquid dispensing probe 132, a residual liquid aspiration probe 133 (residual liquid aspiration mechanism), a residual liquid tank 14, a reaction container moving mechanism 151, a disposal pot 152 (disposal container holding unit), a controller 161, and a storage unit 162.

The sample liquid dispensing probe 131 dispenses a sample liquid into the reaction container 12. The sample liquid dispensing probe 132 dispenses a sample liquid into the reaction container 12. The residual liquid aspiration probe 133 aspirates the residual liquid in the reaction container 12, and discharges the aspirated residual liquid to the residual liquid tank 14. These operation orders will be described later.

The reaction container moving mechanism 151 moves the reaction container 12 between the reaction disk 11 and the disposal pot 152. The disposal pot 152 receives the used reaction container 12. A user timely disposes of the used reaction container 12 in the disposal pot 152.

The controller 161 controls each section (the reaction disk 11, the respective probes, the reaction container moving mechanism 151) provided in the automatic analyzer 1. The storage unit 162 is configured to store data to be used by the controller 161. Operations of the controller 161 will be described later as well as operations of the respective probes and the reaction container moving mechanism 151.

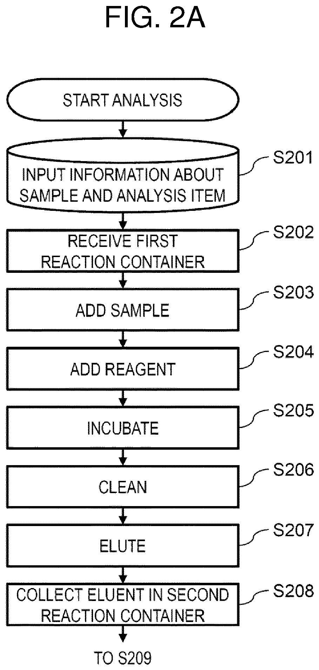

FIG. 2A to FIG. 2C are flowcharts illustrating an operation of analyzing a sample by the automatic analyzer 1. The respective steps will be described below.

### (FIG. 2A: Step S201)

The user inputs information data about the sample type and the analysis item to the controller 161. The controller 161 refers to the storage unit 162 using such information. The storage unit 162 preliminarily stores the information data about the amount of the organic solvent to be received in the reaction container 12 in the analysis step for each sample type and each analysis item. The controller 161 refers to such information to determine the amount of the organic solvent to be received in the reaction container 12 in the subsequent step. The specific example will be described with respect to the following steps.

### (FIG. 2A: Step S202 to S203)

The reaction container moving mechanism 151 places a first reaction container 12 (first reaction container) on the reaction disk 11 (S202). The reagent liquid dispensing probe 131 dispenses the reagent liquid into the first reaction container(S203). Subsequent to step S203, the sample liquid may be diluted with a diluent fed into the first reaction container (S203' to be described later).

### (FIG. 2A: Step S204)

The reagent liquid dispensing probe 132 dispenses the reagent liquid into the first reaction container. At this time, a magnetic particle for adsorption of the sample component is also fed into the first reaction container. For example, the reagent liquid dispensing probe 132 is allowed to dispense the liquid which contains the magnetic particle into the first reaction container. The reagent liquid and the magnetic particle may be dispensed either simultaneously or separately.

### (FIG. 2A: Step S205)

An incubating step for reacting the sample and the reagent is executed. For example, the first reaction container is held at 37°C in the standby state for prescribed time. This facilitates the chemical reaction between the sample and the reagent.

### (FIG. 2A: Step S206)

An unnecessary component except the sample component adhered to the magnetic particle is washed off. Specifically, the reagent liquid dispensing probe 132 dispenses the solvent to be used for cleaning into the first reaction container. Upon completion of cleaning, the reagent liquid dispensing probe 132 aspirates the solvent used for cleaning, and disposes of the aspirated solvent. Depending on the sample type and the analysis item, the organic solvent may be used as the solvent. The analysis item may cause the process to skip over this step to S207.

### (FIG. 2A: Step S207)

The reagent liquid dispensing probe 132 dispenses the solvent for eluting the sample component adhered to the magnetic particle into the first reaction container. Depending on the sample type and the analysis item, the organic solvent may be used as the solvent. The peripherally arranged magnet causes adsorption of the magnetic particle to a wall surface of the first reaction container.

### (FIG. 2A: Step S208)

The reagent liquid dispensing probe 132 aspirates an eluent in the first reaction container (liquid having the sample component eluted by executing S207), and dispenses the eluent into the next reaction container 12 (second reaction container). The magnetic particle is left in the first reaction container. The eluent (sample) in the second reaction container is supplied to the component analysis step to be described later.

### (FIG. 2A: Step S208: Supplement)

An analyzer such as a mass spectrometer is generally configured to perform a liquid analysis. The magnetic particle mixed in the sample liquid may cause failure of the analyzer. For this reason, in this step, the eluent is transferred to the second reaction container. When using the sample type and the analysis item in the condition where such unnecessary particles are not contained in the liquid, execution of this step may be omitted.

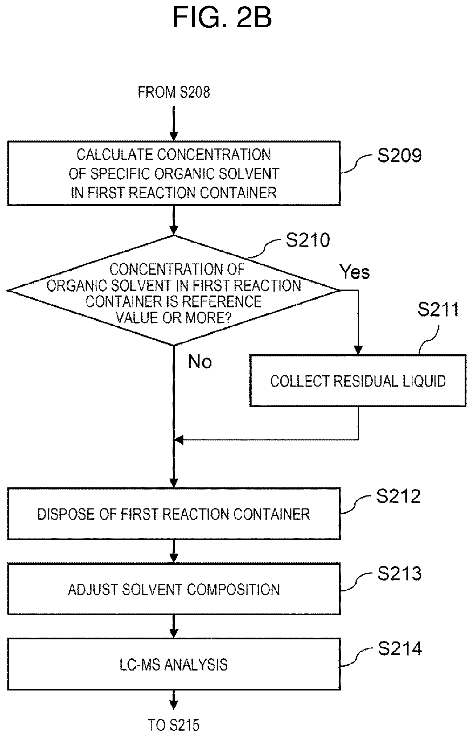

### (FIG. 2B: Step S209)

The controller 161 refers to the information acquired in S201, and calculates the concentration of the specific organic solvent contained in the first reaction container. The organic solvent in this context represents the one which is required by law to have its waste amount strictly controlled. The sample type and the analysis item determine whether or not the organic solvent has been contained in the first reaction container, and the concentration of the organic solvent in this step by the following reason. That is, the type, concentration, liquid amount, introducing order of the liquid containing the organic solvent such as the sample liquid, reagent liquid, cleaning liquid, and eluent are preliminarily specified in accordance with the sample type and the analysis item. If no organic solvent is contained, the concentration becomes zero.

### (FIG. 2B: Step S210)

The controller 161 determines whether or not the concentration of the organic solvent in the first reaction container, which has been calculated in S209 is equal to or higher than the reference value. The reference values may be preliminarily stored in the storage unit 162 for each type of the organic solvent. If the concentration is equal to or higher than the reference value, the process proceeds to S211, otherwise the process skips over the step to S212.

### (FIG. 2B: Step S211)

The residual liquid aspiration probe 133 aspirates the residual liquid in the first reaction container, and discharges the aspirated residual liquid to the residual liquid tank 14. This step is executed only when the concentration of the organic solvent in the first reaction container is equal to or higher than the reference value in S210. That is, the residual liquid tank 14 and the residual liquid aspiration probe 133 are used in this step only when "Yes" is obtained in S210.

### (FIG. 2B: Step S212 to S214)

The reaction container moving mechanism 151 feeds the first reaction container to the disposal pot 152 for disposal (S212). The reagent liquid dispensing probe 132 adjusts the solvent composition in the second reaction container as needed (S213). The second reaction container is supplied to the mass spectrometer to execute the component analysis (S214). S213 is the step for obtaining the solvent composition suitable for the analysis to be performed by the mass spectrometer.

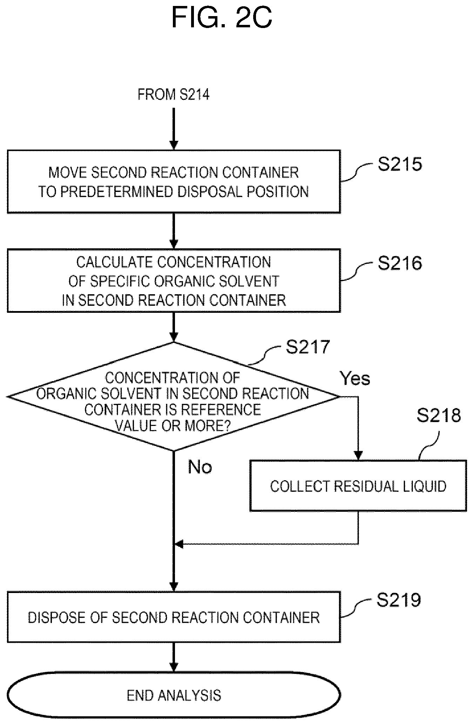

### (FIG. 2C: Step S215)

The reaction disk 11 moves the second reaction container to a predetermined disposal position. The disposal position in this case represents an arbitrary vacant position at which the sample analysis is not executed on the reaction disk 11.

### (FIG. 2C: Step S216)

The controller 161 refers to the information acquired in S201, and calculates the concentration of the specific organic solvent contained in the second reaction container. The calculation order and the significance of the organic solvent are analogous to those in S209.

### (FIG. 2C: Step S217)

The controller 161 determines whether or not the concentration of the organic solvent in the second reaction container, which has been calculated in S216 is equal to or higher than the reference value. The reference value used in this step may be the same as or different from the reference value used in S209.

### (FIG. 2C: Step S218)

The residual liquid aspiration probe 133 aspirates the residual liquid in the second reaction container, and discharges the aspirated residual liquid to the residual liquid tank 14. Like S211, this step is executed only when the concentration of the organic solvent in the second reaction container is equal to or higher than the reference value in S217.

### (FIG. 2C: Step S219)

The reaction container moving mechanism 151 feeds the second reaction container to the disposal pot 152 for disposal.

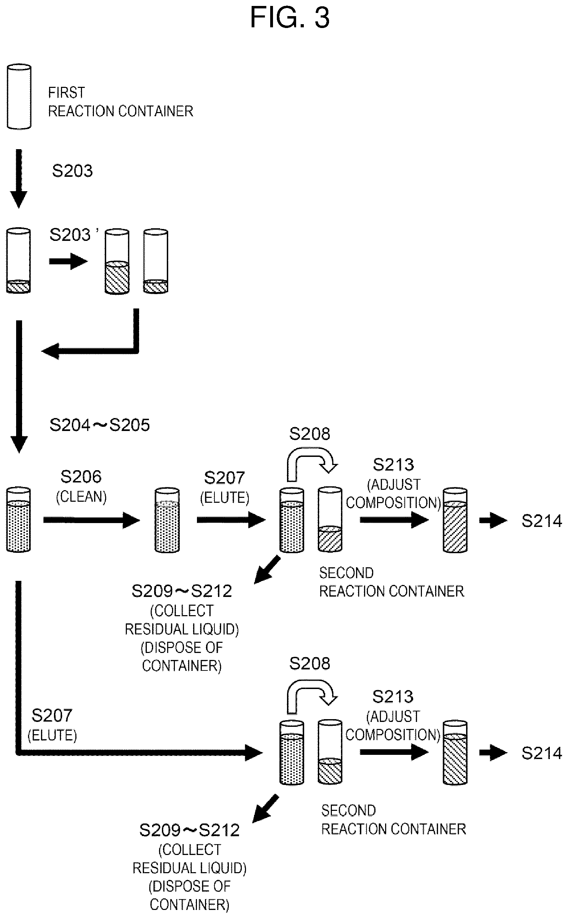

FIG. 3 is a processing flowchart schematically illustrating the flowcharts of FIG. 2. Subsequent to S205 (incubate), the process may proceed in two different cases. In one case, the solvent is transferred after executing S206 (clean), and the process proceeds to S207. In the other case, the process skips over S206 to S207 directly (thus, the eluent is additionally introduced without transferring the solvent). In any of the cases, after transferring the eluent from the first reaction container to the second reaction container, it is determined whether or not to collect the residual liquid from the first reaction container before disposal thereof.

When S206 (clean) is executed, the solvent used for cleaning is removed from the first reaction container, and then the solvent used for S207 (elution) is introduced into the first reaction container. The concentration of the organic solvent existing in the first reaction container in S209 is under the largest influence of the concentration of the organic solvent contained in the eluted solvent. Meanwhile, when S206 is not executed, the organic solvent contained in the sample liquid, the reagent liquid, and the eluent may sufficiently remain in the first reaction container in S209. The sample type and the analysis item preliminarily prescribe whether or not to execute S206.

The controller 161 is required to calculate the concentration of the organic solvent in the first reaction container for each of the sample type and the analysis item in S209. The concentration of the organic solvent is determined by the type, concentration, and the liquid amount of liquids used in the respective steps such as the sample liquid, the reagent liquid, the cleaning liquid, the eluent, and the composition adjustment liquid. Accordingly, the controller 161 is allowed to execute S209 using the above-described information. This applies to the processing with respect to the second reaction container (S215).

### <First Embodiment: Summary>

The automatic analyzer 1 according to the first embodiment is configured to acquire the information about an amount of the organic solvent contained in the liquid to be introduced into the reaction container 12 (for example, reagent liquid, sample liquid, cleaning liquid, eluent, composition adjustment liquid), determine whether or not the organic solvent is contained in the reaction container 12 based on the information, and dispose of the organic solvent contained in the reaction container 12 by aspirating the residual liquid from the reaction container 12. This makes it possible to eliminate the need of collecting the residual liquid from all the reaction containers 12. Upon initialization of the automatic analyzer 1, conventionally, the residual liquid is collected from all the reaction containers 12, requiring much time. Meanwhile, the first embodiment allows reduction in the time for collecting the residual liquid, thus reducing the time for the initializing process. In other processes except the initialization, the embodiment is also effective for reducing the time that involves collection of the residual liquid.

The automatic analyzer 1 according to the first embodiment is configured to transfer the sample from the first reaction container to the second reaction container, and to determine whether or not the amount of the organic solvent contained in the first reaction container is equal to or more than a reference value. When disposing of the first reaction container, it is determined whether or not to aspirate the residual liquid. This makes it possible to improve the efficiency in the disposal process of the first reaction container. The similar determination is made with respect to the second reaction container. This also makes it possible to improve the efficiency in the disposal process of the second reaction container.

Only when it is determined that the organic solvent is contained in the reaction container 12, the automatic analyzer 1 according to the first embodiment drives the residual liquid aspiration probe 133 to aspirate the residual liquid from the reaction container 12. This suppresses the usage of the residual liquid aspiration probe 133, and allows reduction in the maintenance frequency of the residual liquid aspiration probe 133.

Only when it is determined that the organic solvent is contained in the reaction container 12, the automatic analyzer 1 according to the first embodiment aspirates the residual liquid in the reaction container 12 and discharges the aspirated liquid into the residual liquid tank 14. This suppresses an amount of the residual liquid in the residual liquid tank 14, and allows reduction in the replacement frequency of the residual liquid tank 14.

### <Second Embodiment>

In the first embodiment, subsequent to execution of S203, the sample liquid may be diluted with a diluent before proceeding to S204 (S203' in FIG. 3). When transferring the diluted sample liquid into another reaction container, the reaction container prior to the transfer has to be disposed of. At this time point, similar to the processing from S209 to S211, it is possible to aspirate the residual liquid based on the determination of the concentration of the organic solvent.

In the first embodiment, even in the case of the same sample type, whether or not the organic solvent is contained in the reaction container 12 may be determined by the analysis item. This occurs when each reagent to be used may be different depending on the analysis item even in the case of the same sample type. The storage unit 162 may be configured to preliminarily store the information about the relationship of at least one of the analysis item and the sample type with the determination as to whether or not the organic solvent is contained in the reaction container 12. The controller 161 is allowed to determine whether or not the organic solvent is contained in the reaction container 12 by reading such information.

### <Modification of the disclosure>

The present disclosure is not limited to the embodiments as described above, but includes various modifications. For example, the embodiments are described in detail for readily understanding of the present disclosure which is not necessarily limited to the one equipped with all structures as described above. It is possible to replace a part of the structure of one embodiment with the structure of another embodiment. The one embodiment may be provided with an additional structure of another embodiment. It is further possible to add, remove, or replace a part of the structure of the other embodiment to, from and with a part of the structure of the respective embodiments.

In the embodiments as described above, the controller 161 may be configured with the hardware such as the function implemented circuit device, or may be configured with the function implemented software to be executed by an arithmetic unit (for example, Central Processing Unit : CPU).

The present disclosure is applicable to the case where the waste amount of the substance except the organic solvent has to be strictly controlled. For example, in the analysis step using the toxic substance, the waste amount of such substance is compared with the reference value in accordance with the disclosure. This makes it possible to determine whether or not to aspirate the toxic substance in the reaction container. The present disclosure is applicable to the general liquid which contains the organic substance considered to be unsafe. For example, the organic substance includes a formic acid and an ammonia.

### Reference Sign List

1: automatic analyzer
11: reaction disk
12: reaction container
131: sample liquid dispensing probe
132: reagent liquid dispensing probe
133: residual liquid suction probe
14: residual liquid tank
151: reaction container moving mechanism
152: disposal pot
161: controller
162: storage unit

## Claims

1. A control method for controlling an automatic analyzer that analyzes a sample, the control method comprising:
a step of acquiring information about whether or not an amount of an organic solvent contained in a liquid added to a reaction container storing the sample is a reference value or more;
a step of determining, according to the information, whether or not the amount of the organic solvent contained in the reaction container is the reference value or more;
a step of sucking a residual liquid remaining in the reaction container from the reaction container when it is determined that the amount of the organic solvent contained in the reaction container is the reference value or more, and not sucking the residual liquid from the reaction container when it is determined that the amount of the organic solvent contained in the reaction container is not the reference value or more; and
a step of moving the reaction container to a disposal container holding unit configured to hold a reaction container that is disposed of.

2. The control method according to claim 1, wherein
in the step of acquiring the information, the amount of the organic solvent contained in the liquid is calculated using a concentration of the organic solvent contained in the liquid and an amount of the liquid, and the information is acquired according to a calculation result.

3. The control method according to claim 1, further comprising:
a step of acquiring data describing a correspondence relationship between at least one of an analysis item during analyzing of the sample and a type of the sample, and an amount of the organic solvent contained in the liquid, wherein
in the step of acquiring the information, the information is acquired by using at least one of the analysis item during analyzing of the sample and the type of the sample and referring to the data.

4. The control method according to claim 1, further comprising:
a step of dispensing a sample liquid containing the sample into a first reaction container; and
a step of transferring the liquid in the first reaction container to a second reaction container, wherein
in the determining step, it is determined whether or not the amount of the organic solvent contained in the first reaction container is the reference value or more,
in the step of sucking or not sucking the residual liquid, the residual liquid in the first reaction container is sucked when it is determined that the amount of the organic solvent contained in the first reaction container is the reference value or more, and the residual liquid is not sucked when it is determined that the amount of the organic solvent contained in the first reaction container is not the reference value or more, and
in the step of moving the reaction container, the first reaction container is moved to the disposal container holding unit.

5. The control method according to claim 1, further comprising:
a step of dispensing a sample liquid containing the sample into a first reaction container;
a step of transferring the liquid in the first reaction container to a second reaction container; and
a step of analyzing the liquid stored in the second reaction container, wherein
in the determining step, it is determined whether or not the amount of the organic solvent contained in the second reaction container is the reference value or more after the analysis is completed,
in the step of sucking or not sucking the residual liquid, the residual liquid in the second reaction container is sucked when it is determined that the amount of the organic solvent contained in the second reaction container is the reference value or more, and the residual liquid is not sucked when it is determined that the amount of the organic solvent contained in the second reaction container is not the reference value or more, and
in the step of moving the reaction container, the second reaction container is moved to the disposal container holding unit.

6. The control method according to claim 1, wherein
the liquid is at least one of:
a sample liquid containing the sample;
a reagent liquid containing a reagent that reacts with the sample;
a cleaning liquid used for cleaning an unnecessary component stored in the reaction container;
an eluent by which the sample is eluted; and
a composition adjustment liquid generated by adjusting a composition of a sample liquid supplied to an analyzer that analyzes a component of the sample.

7. The control method according to claim 1, wherein
the automatic analyzer includes a residual liquid tank configured to store the residual liquid, and
the control method further comprises:
a step of discharging the sucked residual liquid to the residual liquid tank when the residual liquid is sucked from the reaction container, and not discharging the residual liquid to the residual liquid tank when the residual liquid is not sucked from the reaction container.

8. The control method according to claim 1, wherein
the automatic analyzer includes a residual liquid suction mechanism configured to suck the residual liquid from the reaction container, and
the control method further comprises:
a step of driving the residual liquid suction mechanism so as to suck the residual liquid after analysis is performed when it is determined that the amount of the organic solvent contained in the reaction container is the reference value or more, and not driving the residual liquid suction mechanism when it is determined that the amount of the organic solvent contained in the reaction container is not the reference value or more.

9. An automatic analyzer that analyzes a sample, the automatic analyzer comprising:
a controller configured to control the automatic analyzer by performing the control method according to claim 1.
